# EUROPEAN PATENT APPLICATION

(11) **EP 3 640 668 A1**
(43) Date of publication of application: **22.04.2020**
(21) Application number: 19178653.2
(22) Date of filing: 06.06.2019
(51) Int. Cl.: G01S 7/484, G01S 7/486

(54) **SENSOR AND ACTUATOR SYSTEM AND METHOD FOR OPERATING A SENSOR AND ACTUATOR SYSTEM**

(30) Priority: 16.10.2018 EP 18200789
(71) Applicant: IDT Inc., San Jose, CA 95138 (US)
(72) Inventor: TAVANO, Giuseppe, 80992 München (DE); GRUBER, Dominik, 80997 München (DE); RADOVIC, Marko, 72218 Wildberg (DE)
(74) Representative: Lippert Stachow Patentanwälte Rechtsanwälte Partnerschaft mbB

(57) **Abstract**

The invention relates to a Method for operating a sensor and actuator system (1), comprising the steps of:
generating a stimulus (4) and providing the generated stimulus (4) to the environment (5) of the system (1) by means of an actuator (2),
detecting the response (6) of the environment (5) to the stimulus (4) by means of a sensor (3),
synchronizing the generation of the stimulus (4) and the detection of the response (6) in the time domain, and
repeating the generation of the stimulus (4) and the detection of the response (6) in a regular patter,
which is characterized in that
the generation of the stimulus (4) and the detection of the response (6) in the regular pattern are randomly and synchronously shifted in the time domain to cause a dithering in the time domain.

The invention further relates to a sensor and actuator system (1) .

## Description

The invention relates to a method for operating a sensor and actuator system. The invention further relates to a sensor and actuator system.

A sensor and actuator system (SAS) usually comprises at least one actuator for generating a stimulus. This generated stimulus is provided to the environment of the sensor and actuator system. For detecting the response of the environment to the stimulus the sensor and actuator system further comprises at least one sensor. The sensor and actuator system can further comprise a control unit for synchronizing the at least one actuator and the at least one sensor, especially for synchronizing the generation of the stimulus and the detection of the response in the time domain. Furthermore, the generation of the stimulus and the detection of the response is repeated in a regular pattern.

An example of a sensor and actuator system is a light detection and ranging (Lidar) system, also called laser detection and ranging (Ladar) system. Such systems measure the distance to a target by illuminating the target with pulsed laser light and measuring the reflected pulses with an optical sensor. Differences in laser return times and wavelength can then be used to make 3-D representations of the target. Lidar systems have become popular in automotive applications, for example in advanced safety systems. A lidar systems is for example used to scan the surroundings of a car to detect any obstacles on a collision course with the car and issue a warning to the driver and/or to initiate an emergency brake. High performance Lidar systems can also recognize the type of obstacle by checking the parameters, e.g. the amplitude, of the reflected signal. According to the reflectivity of the object, for example a car or a person, the detector will receive a signal of different amplitude. Lidar systems are often used in autonomous cars for controlling and navigation purposes. In such automotive applications it is essential that the Lidar systems is highly available and precise with a minimum of detection errors.

The sensor and actuator system can suffer from noise injection. If the noise is random, i.e. uncorrelated, the signal-to-noise ratio (SNR) can be improved by averaging multiple acquisition cycles, which is a well-known technique in signal processing. However, if the noise is not random but correlated to the stimulus, this technique is not improving the SNR.

It is thus an object of the invention to improve the signal-to-ratio of sensor and actuator systems for uncorrelated and correlated noise.

This object is solved by a method for operating a sensor and actuator system, comprising the steps of:
generating a stimulus and providing the generated stimulus to the environment of the system by means of an actuator,
detecting the response of the environment to the stimulus by means of a sensor,
synchronizing the generation of the stimulus and the detection of the response in the time domain, and
repeating the generation of the stimulus and the detection of the response in a regular patter,
which is characterized in that the generation of the stimulus and the detection of the response in the regular pattern are randomly and synchronously shifted in the time domain to cause a dithering in the time domain.

According to the invention the sensor and actuator system first generates a stimulus and provides this generated stimulus to the environment of the system. The stimulus is generated and provided to the environment by at least one actuator. The response of the environment to the stimulus is detected using at least one sensor. The generation of the stimulus and the detection of the response are synchronized in the time domain. Usually the environment caused a delay and it takes a certain time until the response of the environment can be detected using the at least one sensor. Thus, the generation of the stimulus and the detection of the response are advantageously synchronized in the time domain. The generation of the stimulus and the detection of the response are repeated in a regular pattern, also referred to as acquisition cycles. By calculating the average over multiple acquisition cycles the signal-to-ratio can be improved because the effects of uncorrelated noise are reduced.

The generation of the stimulus and the detection of the response in the regular pattern are randomly and synchronously shifted in the time domain to cause a dithering in the time domain. By creating the dithering in the time domain, the effects of correlated noise can be reduced by building the average over multiple acquisition cycles because the dithering results in a shift between the generated stimulus and the detected response on the one hand and the correlated noise on the other hand. Due to the randomly shifting in each acquisition cycle the effect of the correlated noise on the detected response is different for each acquisition cycle and thus can be reduced by averaging over multiple acquisition cycles.

According to a variant of the invention the randomly shifting, also referred to as dithering, is in a predetermined range, also called dithering window. The dithering window is for example programmable in a range of at least 5 or 6 bits. This means that the maximum delay time (shifting) is 32*T_{clock} or 64*T_{clock}. If the clock is 200 MHz the maximum delay is 160 or 320 ns.

In a variant of the invention the detection of the response is performed over a predetermined time period. This time period is also referred to as acquisition window. According to a preferred variant the predetermined time period is started a predetermined reaction delay after the stimulus has been generated and provided to the environment. Thus, after the stimulus has been generated and provided to the environment the predetermined reaction delay is waited before the detection of the response is performed over the predetermined time period. The predetermined time period, i.e. the acquisition window, has a length that is sufficient to detect all relevant signals from the environment relating to the stimulus. Since the stimulus is provided to the environment and it takes some time until the response can be detected, the predetermined reaction delay at least partially supresses signals received from the environment not relating to the stimulus. The time until the environment generates the response and this response can be detected by the sensor and actuator system can vary in a certain a range and therefore the detection of the response is performed over the predetermined time period to detect all relevant signal information relating to the stimulus.

The length of the acquisition window depends, among other things, on the distance that the lidar system is intended to resolve. The longer the acquisition window, the bigger is the range that the lidar system can cover. On the other hand, the amount of data to be processed increases with the length of the acquisition window.

Pursuant to an advantageous variant of the invention the predetermined time period is synchronously shifted in the time domain with the generation of the stimulus. Thus, the generation of the stimulus and the detection of the response from the environment are synchronized even after shifting in the time domain. This avoids a shifting of the response of the environment out of the acquisition window.

According to a variant of the invention the predetermined time period, i.e. the acquisition window, is started by generating a start pulse, which is generated after the predetermined reaction delay. The start pulse can be easily shifted synchronously in the time domain with the generation of the stimulus.

In a further preferred variant of the invention the detection of the response is based on a sampling, i.e. the signals received from the environment are detected only at particular time points. For example, every time a sampling pulse is generated, the present response of the environment is detected by the sensor and actuator system. The accuracy of the detection can be modified by adjusting the sampling rate of the generated sampling pulses.

The signals received from the environment can be resolved better with an increasing sampling rate. For example, a lidar system is working on the time-of-flight principle, where it is important that the rising edge of the received signal (incoming pulse) can be resolved as much as possible. If the rising edge is in the order of 10 ns, as an example, the sampling rate should be in the order of 500 MHz to 1 GHz to resolve the incoming pulse accurately.

Advantageously the start of the sampling pulses is synchronized with the start of the predetermined time period. For example, the sampling is started together with the start pulse starting the predetermined time period, i.e. the acquisition window. Thus, the generation of the stimulus, the start of the predetermined time period and the sampling regarding the detection of the response of the environment are all synchronized in the time domain, whereas the correlated noise is not synchronized with the dithering in the time domain. In this way the correlated noise can be reduced.

Pursuant to a particularly advantageous variant the method comprises the step of calculating the average over multiple repetitions, also referred to as acquisition cycles. Thus, the generation and detection are performed multiple times, with different randomly shifting in the time domain. Since the generation and detection are still synchronized in the time, whereas the correlated noise is not, calculating the average over multiple repetitions can reduced the effects of the correlated noise. Preferably the average is calculated over at least 64 repetitions, particularly of 128 or more repetitions.

The object is further solved by a sensor and actuator system comprising:
at least one actuator for generating a stimulus, which is provided to the environment of the system,
at least one sensor for detecting the response of the environment to the stimulus, and
a control unit for synchronizing the at least one actuator and the at least one sensor,
which is characterized in that
the system further comprises a dithering unit, which randomly and synchronously shifts the generation of the stimulus and the detection of the response of the environment in the time domain.

The at least one sensor of the sensor and actuator system first generates a stimulus and provides this generated stimulus to the environment of the system. The at least one sensor of the actuator and sensor system detects the response of the environment to the stimulus. The generation of the stimulus and the detection of the response are synchronized in the time domain by a control unit of the actuator and sensor system. Usually the environment caused a delay and it takes a certain time until the response of the environment can be detected using the at least one sensor. Thus, the generation of the stimulus and the detection of the response are advantageously synchronized in the time domain. Advantageously the generation of the stimulus and the detection of the response are repeated in a regular pattern, called acquisition cycles. By calculating the average over multiple acquisition cycles the signal-to-ratio can be improved because the effects of uncorrelated noise are reduced.

The dithering unit of the sensor and actuator system randomly and synchronously shifts the generation of the stimulus and the detection of the response in the time domain to cause a dithering in the time domain. Thus, in each acquisition cycle of the regular patter the generation of the stimulus and the detection of the response of the environment are randomly and synchronously shifted in the time domain. By creating the dithering in the time domain, the effects of correlated noise can be reduced by building the average over multiple acquisition cycles because the dithering results in a shift between the generated stimulus and the detected response on the one hand and the correlated noise on the other hand. Due to the randomly shifting in each acquisition cycle the effect of the correlated noise on the detected response is different for each acquisition cycle and thus can be reduced by averaging over multiple acquisition cycles.

According to a preferred variant of the invention the sensor and actuator system implements the method according to the invention.

In the following the invention will be further explained with respect to the embodiments shown in the figures. It shows:
- Fig. 1: a schematic view of a sensor and actuator system according to the invention, and
- Fig. 2: signal diagrams of a sensor and actuator system according to the invention.

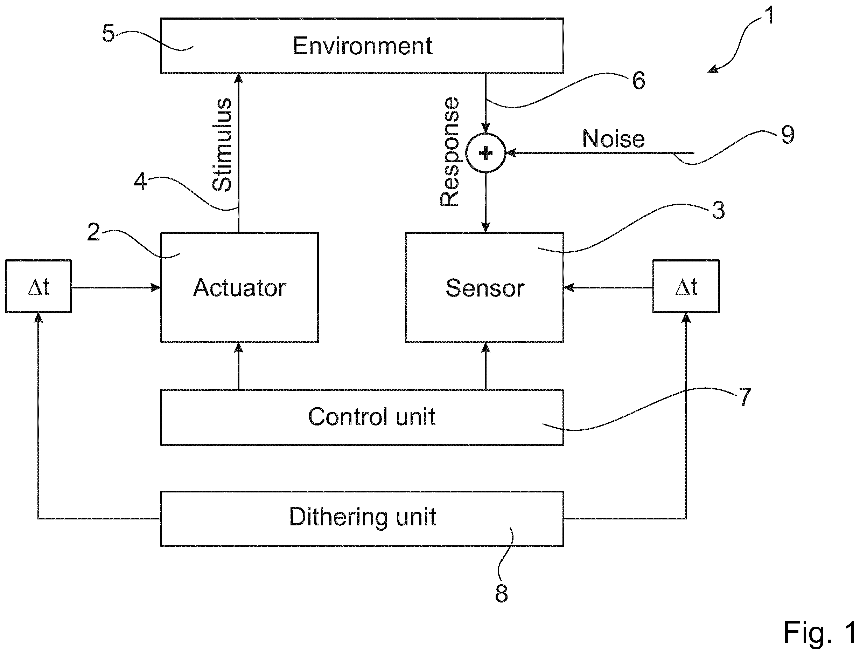

Fig. 1 shows a schematic view of an exemplary embodiment of a sensor and actuator system 1 according to the invention. The sensor and actuator system 1 comprises an actuator 2 and a sensor 3. The actuator 2 generates a stimulus 4 and provides this stimulus 4 to the environment 5. The environment 5 reacts to the stimulus 4 of the actuator 2 and creates a certain response 6. The response 6 of the environment 5 is detected by the sensor 3 of the sensor and actuator system 1.

The sensor and actuator system 1 comprises a control unit 7 for synchronizing the actuator 2 and the sensor 3. Thus, the generation of the stimulus 4 by the actuator 2 and the detection of the response 6 by the sensor 3 are synchronized, particularly in the time domain.

According to the present invention the sensor and actuator system 1 further comprises a dithering unit 8. The dithering unit 8 randomly and synchronously shifts the generation of the stimulus 4 by the actuator 2 and the detection of the response 6 of the environment 5 by the sensor 3 in the time domain. This is represented in Fig. 1 by the additional block labelled with Δt.

In the embodiment shown in Fig. 1 the response 6 is subject to noise 9 added to the response 6. The noise 9 can be correlated and/or uncorrelated.

If the noise 9 is random, i.e. uncorrelated, the signal-to-noise ratio can be improved by averaging multiple acquisition cycles 10, which is a well-known technique in signal processing. However, if the noise 9 is not random but correlated to the stimulus 4, this technique is not improving the signal-to-noise ratio.

The dithering unit 8 of the sensor and actuator system 1 randomly and synchronously shifts the generation of the stimulus 4 and the detection of the response 6 in the time domain to cause a dithering in the time domain. Thus, in each acquisition cycle 10 the generation of the stimulus 4 and the detection of the response 6 of the environment 5 are randomly and synchronously shifted in the time domain. By creating the dithering in the time domain, the effects of correlated noise 9 can be reduced by building the average over multiple acquisition cycles 10 because the dithering results in a shift between the generated stimulus 4 and the detected response 6 on the one hand and the correlated noise 9 on the other hand. Due to the randomly shifting in each acquisition cycle 10 the effect of the correlated noise 9 on the detected response 6 is different for each acquisition cycle 10 and thus can be reduced by averaging over multiple acquisition cycles 10.

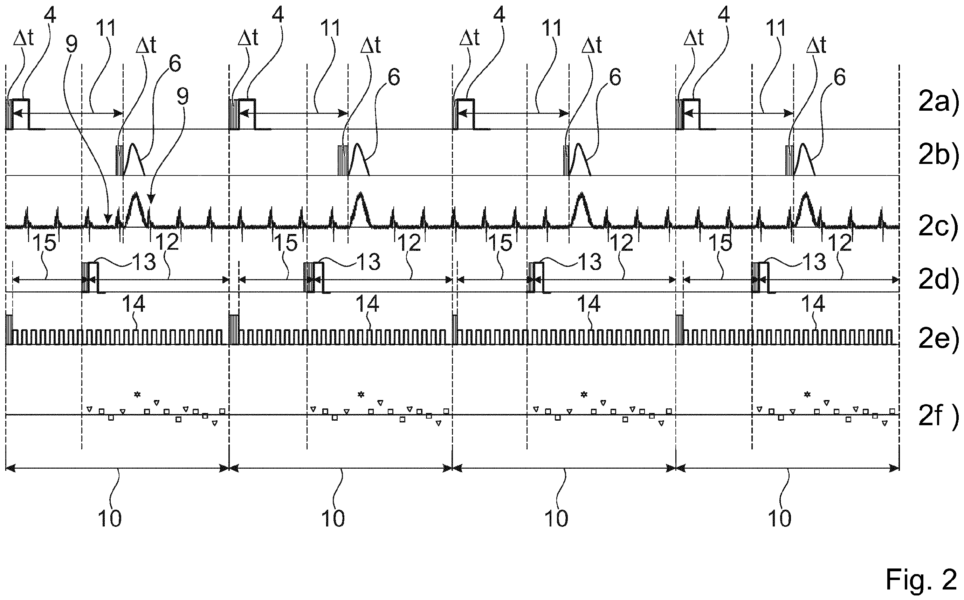

Fig. 2 shows signal diagrams of a sensor and actuator system 1 according to the invention. Fig. 2 shows the diagrams of the sensor and actuator system 1 over four consecutive acquisition cycles 10.

Fig. 2a shows the generated stimulus 4 for the four acquisition cycles 10 over time. The stimulus 4 is generated by the actuator 2 and provided to the environment 5. The dithering unit randomly shifts the generated stimulus 4 in the time domain, represented by Δt at each beginning of the acquisition cycles 10.

In Fig. 2b the response 6 of the environment 5 over time is shown. The response 6 will be detected by the sensor 3 of the sensor and actuator system 1 a certain response delay 11 after the generation of the stimulus 4. Since the generation of the stimulus 4 has been shifted in the time domain by Δt due to the dithering unit 8, the response 6 is also shifted in the time domain by Δt.

The noise 9 added to the response 6 is shown in Fig. 2c. The random, i.e. uncorrelated, noise 9 is independent of the sensor and actuator system 1 and causes disturbances over the total time. This has been symbolized by the fuzziness of the response 6 and during idle times. The noise 9 correlated to the sensor and actuator system 1 is shown by regular peaks. Due to the dithering unit the response 6 and the uncorrelated noise 9 are shifted relative to the correlated noise 9 and the response 6 differently overlaps with the regular peaks of the correlated noise 9.

As can be seen from Fig. 2d the acquisition window 12 is started after a reaction delay 15 by a start pulse 13. This start pulse 13 is also shifted by Δt due to the dithering unit 8.Thus, also the start of the acquisition window 12 is shifted by Δt, like the generation of the stimulus 4 and the response 6. Therefore, the stimulus 4, the response 6 and the acquisition window 12 are shifted synchronously in the time domain.

Preferably the detection of the response 6 is based on a sampling technique. The corresponding sampling signal 14 is shown in Fig. 2e. At each beginning of an acquisition cycle 10 the sampling signal 14 is also shifted in the time domain by Δt due to the dithering unit 8. Thus, the sampling signal 14 is automatically synchronized with the acquisition window 12 because both are shifted by Δt in each acquisition cycle 10.

The result of the sampling of the response 6 and the noise 9 as shown in Fig. 2c is shown in Fig. 2f. A result referring to the response 6 is symbolized by star symbol, a result referring to the correlated noise is symbolized by a triangular symbol and a result referring to uncorrelated noise is symbolized by a quadratic symbol.

Averaging the results of the four shown acquisition cycles 10 will reduced the effects of the correlated noise 9 and of the uncorrelated noise 9, whereas the result for the response 6 is not affected by the dithering caused by the dithering unit 8 because the generation of the stimulus 4 and the detection of the response 6 are synchronized in the time domain by the dithering unit 8. The generation of the stimulus 4 as well as the detection of the response 6 of the environment 5 are shifted synchronously by Δt in the time domain.

### Sensor and actuator system and method for operating a sensor and actuator system

### List of reference numbers

- 1: sensor and actuator system
- 2: actuator
- 3: sensor
- 4: stimulus
- 5: environment
- 6: response
- 7: control unit
- 8: dithering unit
- 9: noise (correlated and uncorrelated)
- 10: acquisition cycle
- 11: response delay
- 12: predetermined time (acquisition window)
- 13: start pulse
- 14: sampling signal

## Claims

1. Method for operating a sensor and actuator system (1), comprising the steps of:
generating a stimulus (4) and providing the generated stimulus (4) to the environment (5) of the system (1) by means of an actuator (2),
detecting the response (6) of the environment (5) to the stimulus (4) by means of a sensor (3),
synchronizing the generation of the stimulus (4) and the detection of the response (6) in the time domain, and
repeating the generation of the stimulus (4) and the detection of the response (6) in a regular patter,
**characterized in that**
the generation of the stimulus (4) and the detection of the response (6) in the regular pattern are randomly and synchronously shifted in the time domain to cause a dithering in the time domain.

2. Method according to claim 1,
wherein the detection of the response (6) is performed over a predetermined time period (12).

3. Method according to claim 2,
wherein the predetermined time period (12) is started a predetermined reaction delay (15) after the stimulus (4) has been generated and provided to the environment (5).

4. Method according to claim 3,
wherein the start of the predetermined time period (12) is synchronously shifted in the time domain with the generation of the stimulus (4).

5. Method according to claim 4,
wherein the predetermined time period (12) is started by generating a start pulse (13), which is generated after the predetermined reaction delay (15).

6. Method according to any of claims 1 to 5,
wherein the detection of response (6) is based on a sampling.

7. Method according to claim 6,
wherein the sampling is synchronized with the start of the predetermined time period (12).

8. Method according to any of claims 1 to 7,
comprising the step of calculating the average over multiple repetitions (10).

9. Sensor and acquisition system (1) comprising:
at least one actuator (2) for generating a stimulus (4), which is provided to the environment (5) of the system (1),
at least one sensor (3) for detecting the response (6) of the environment (5) to the stimulus (4), and
a control unit (7) for synchronizing the at least one actuator (2) and the at least one sensor (3),
**characterized in that**
the system (1) further comprises a dithering unit (8), which randomly and synchronously shifts the generation of the stimulus (4) and the detection of the response (6) of the environment (5) in the time domain.

10. Sensor and actuator system (1) according to claim 9, wherein the sensor and actuator system (1) implements the method according to any of claims 1 to 8.
